# DEMANDE DE BREVET EUROPEEN

(11) **EP 2 339 516 A1**
(43) Date de publication de la demande: **29.06.2011**
(21) Numéro de dépôt: 10194380.1
(22) Date de dépôt: 09.12.2010
(51) Int. Cl.: G06Q 10/00, G06F 3/048, H04L 29/06, H04L 29/08

(54) **Procédé et système d'interaction avec une application partagée entre plusieurs utilisateurs**

(30) Priorité: 10.12.2009 FR 0958856
(71) Demandeur: FRANCE TELECOM, 75015 Paris (FR)
(72) Inventeur: Coldefy François, 22300, Lannion (FR); Belatar, Mohammed, Safi (MA)
(74) Mandataire: Le Tourneau, Augustin

(57) **Abrégé**

La présente invention concerne de façon générale les interfaces numériques partagées permettant un travail collaboratif entre plusieurs utilisateurs, et notamment un procédé et un système d'interaction avec une application commune partagée (12) entre plusieurs utilisateurs (A, B, C).

L'application partagée a au moins une fonction et est affichée dans un composant applicatif commun (22) d'une interface physique (10) partagée entre les utilisateurs.

Le procédé selon l'invention comprend les étapes consistant à :
- créer un composant individualisé (24, 24'), indépendant dudit composant applicatif commun (22), avec lequel un utilisateur peut interagir individuellement pour définir, au moyen de l'interface physique partagée, au moins un paramètre de ladite fonction ;
- pour ledit utilisateur, interagir avec l'application partagée en liant ledit composant individualisé au composant applicatif commun de sorte à définir ladite fonction.

## Description

La présente invention concerne de façon générale les interfaces numériques partagées permettant un travail collaboratif entre plusieurs utilisateurs, et notamment un procédé et un système d'interaction avec une application commune partagée.

Le travail collaboratif concerne les activités numériques menées simultanément par plusieurs utilisateurs, comme par exemple la recherche d'information sur le web (location d'appartement ou de vacances, cadeaux des enfants, etc.) ou la consultation de bases de données (suivi de stocks, des livraisons pour des professionnels).

On a pu observer que les activités collectives traditionnelles mettent en oeuvre une alternance entre des phases collectives au cours desquelles les gens échangent sur l'activité en cours et des phases individuelles au cours desquelles chacun mène une activité autonome en relation avec la tâche collective.

Le travail collaboratif peut être mis en oeuvre sur des interfaces numériques permettant l'interaction simultanée de plusieurs utilisateurs, telles que des tables, tablettes ou écrans interactifs, des écrans tactiles type TabletPC, des tableaux blancs, des murs interactifs ou encore des ardoises numériques multi-tactiles.

Pour les besoins d'illustration de l'invention, on s'intéresse par la suite à la recherche d'informations numériques sur le web. Toutefois, l'homme du métier est à même d'appliquer l'invention à d'autres applications, par exemple la consultation de bases de données, la visualisation de données numériques (images tomographiques ou sismologiques, dessins techniques réalisés par les utilisateurs, textes écrits par ceux-ci, etc.)

Ainsi, pour opérer une consultation web, l'utilisateur utilise traditionnellement un moteur de recherche accessible par une page web : Google, Bing, Yahoo (noms commerciaux), etc. Cette page web s'affiche classiquement dans un composant applicatif, par exemple une fenêtre de navigateur, sur l'écran de son ordinateur.

L'utilisateur saisit alors une requête au clavier sur la page web ou dans une zone dédiée du navigateur comme par exemple dans la barre d'outils (Google *Toolbar).* Il lance alors la fonction de recherche, déclenchant l'exécution de la requête. Le résultat s'affiche ensuite en dessous, dans la page réactualisée.

Chaque lien hypertexte (ou hyperlien) associé à chaque élément du résultat peut à son tour être cliqué de sorte à explorer les données numériques résultats.

Certaines applications web peuvent également mettre en oeuvre des fenêtres supplémentaires qui s'affichent temporairement pour saisir, par exemple, un mot de passe. L'application web et cette fenêtre sont cependant étroitement liées en ce que cette dernière n'est utilisée qu'avec l'application web correspondante.

L'utilisation partagée d'un navigateur est toutefois généralement âpre, notamment du fait que les ordinateurs sont initialement prévus pour une utilisation individuelle.

De cette dernière, résultent une dissymétrie du rôle des différents utilisateurs et un inconfort pour certains d'entre eux. En effet, un seul utilisateur "maître" a la main sur l'interface physique (clavier, souris et affichage) du dispositif numérique d'interaction. Seul cet utilisateur interagit avec les données numériques, et les autres se cantonnent à être spectateurs ou à discuter et inciter l'utilisateur "maître" à faire telle ou telle interaction ou même à passer la main.

On illustre cela dans le cas d'un navigateur web partagé dont le composant applicatif commun pour l'affichage et l'interaction est placé au centre d'une table interactive.

Avant de lancer toute nouvelle recherche à l'aide du navigateur web partagé, un utilisateur doit négocier l'accord des autres pour prendre la main sur la page ou l'applicatif de sorte à l'amener vers lui pour saisir le texte de sa nouvelle requête.

L'utilisateur, en s'appropriant le composant applicatif commun affichant l'application partagée interrompt l'activité des autres sur celui-ci, qui doivent attendre la fin de la séquence d'interaction: orientation vers soi du composant à l'aide d'outils de rotation/déplacement/re-dimensionnement, saisie du texte, lancement de la requête puis remise en place de la page au centre de la table interactive pour permettre la visualisation commune des résultats.

Pendant cette séquence d'interaction, les autres utilisateurs n'ont plus accès ou difficilement accès au navigateur partagé, même pour une simple visualisation.

Par ailleurs, lorsque deux utilisateurs souhaitent saisir en même temps des requêtes différentes sur le navigateur partagé, ils doivent négocier celui qui prendra au final le contrôle du navigateur. Cela entraîne d'éventuels délais inutiles, notamment lorsqu'au final, le deuxième utilisateur est, à sa tour, amené à saisir sa requête suite à des résultats infructueux du premier utilisateur notamment.

Il existe donc un besoin d'améliorer l'interaction collective à partir d'une même interface physique, c'est-à-dire d'améliorer les interactions d'utilisateurs négociées sur un même composant applicatif commun focalisant l'attention du groupe d'utilisateurs (un navigateur web dans notre exemple).

On connaît cependant quelques solutions techniques collaboratives proposées notamment par les publications *"WebSurface: an interface for co-located collaborative information gathering"* de Philip Tuddenham, lan Davies et Peter Robinson (ci-après WebSurface) et *"*Cosearch: a system for co-located collaborative Web Search" de Saleema Amershi et Meredith Ringel Morris, CHI 2008 (ci-après CoSearch).

La solution WebSurface met en oeuvre des navigateurs web classiques et une interface physique, ici une table interactive, disposant d'un clavier et d'un stylet propres à chaque utilisateur. Le travail collaboratif de cette solution repose principalement sur les capacités du système à pouvoir faire glisser une fenêtre applicative d'un utilisateur à l'autre sur la table interactive.

Les difficultés exposées ci-dessus subsistent toutefois dans cette solution, car les navigateurs utilisés demeurent classiques, c'est-à-dire prévus pour un utilisateur individuel.

Dans CoSearch, un navigateur web adapté à la navigation à plusieurs est proposé. Cette navigation peut notamment être réalisée via une interaction multi-souris sur le même ordinateur (CoSearchPC) relié à un unique clavier ou via des terminaux mobiles propres à chaque utilisateur (CoSearchMobile).

Cette solution repose sur l'utilisation d'onglets et de codes couleur pour mémoriser et identifier les requêtes de tous les utilisateurs sur la fenêtre du navigateur partagé, et ainsi permettre, à la demande, l'accès à l'une de ces requêtes au sein du composant application commun (le navigateur web).

Là encore, malgré l'utilisation de plusieurs souris concurrentes sur l'ordinateur, l'ensemble des interactions des utilisateurs est concentré au niveau du seul navigateur web partagé. Les phases individuelles nécessaires à une réalisation efficace d'un travail collectif sont donc très limitées et difficiles à mettre en oeuvre.

Enfin, on connaît de la publication *"TeamSearch: Comparing Techniques for* Co-*Present Collaborative Search of Digital Media"* (M.R. Morris et al., 2006), un système de recherche collaborative à l'aide d'une table interactive où chaque utilisateur dispose de jetons personnels pour définir des critères de recherche.

Toutefois, ces jetons sont déposés par les utilisateurs sur des composants *widgets* communs pour former soit des requêtes individuelles, soit des requêtes collectives. L'utilisation de ces composants communs lors des phases individuelles peut cependant créer une gêne entre les utilisateurs, voire influencer certains d'entre eux en fonction des jetons qui auront pu être déposés par les autres utilisateurs.

Au regard des inconvénients des techniques de l'art, un besoin ressenti est celui d'améliorer la fluidité des interactions de groupe sur une interface physique unique, en rendant notamment simples les interactions collectives et les interactions individuelles nécessaires à un travail collectif efficace et en permettant leur coexistence.

Dans ce dessein, l'invention concerne notamment un procédé d'interaction avec une application partagée entre plusieurs utilisateurs, l'application partagée ayant au moins une fonction et étant affichée dans un composant applicatif commun d'une interface physique partagée entre les utilisateurs, caractérisé en ce qu'il comprend les étapes consistant à :
- créer un composant individualisé, indépendant dudit composant applicatif commun, avec lequel un utilisateur peut interagir individuellement;
- à l'aide de l'interface physique partagée, définir, par l'utilisateur, au moins un paramètre de ladite fonction à l'intérieur du composant individualisé créé ;
- pour ledit utilisateur, interagir avec l'application partagée en liant ledit composant individualisé comprenant l'au moins un paramètre défini au composant applicatif commun, de sorte à définir ladite fonction.

On entend par "indépendant" le fait que le composant individualisé n'est pas, par définition, lié au composant applicatif commun, et donc peut être exploité indépendamment du composant applicatif commun. En d'autres termes et comme on le verra par la suite, il est configuré pour pouvoir être utilisé indifféremment avec l'un ou l'autre parmi plusieurs composants applicatifs distincts (qui sont des applications distinctes ou des instances distinctes de mêmes applications).

La notion d"'individualisé" se rapporte, quant à elle, au fait que le composant correspondant a vocation à être utilisé uniquement par l'utilisateur. Il correspond donc à une activité personnelle qui, grâce au lien subséquent avec le composant applicatif commun, est en relation avec la tâche collective.

Les étapes de l'invention correspondent, dans un exemple décrit ci-après plus en détails, notamment à créer un composant "requête" indépendant à l'intérieur duquel l'utilisateur saisit indépendamment des critères de recherche web, puis à piloter un navigateur web partagé à l'aide de l'un quelconque des composants "requête" de plusieurs utilisateurs, pour effectuer une recherche correspondant aux critères du composant retenu.

Comme il ressort de la définition générale de l'invention et de cet exemple, l'invention, grâce à l'utilisation de composants individualisés indépendants à l'intérieur desquels chaque utilisateur peut définir ses propres stratégies de recherche, permet d'allier les interventions individuelles pour l'utilisation de ces composants individualisés et l'intervention à but commun par interaction entre le composant individualisé et l'application partagée.

Du fait qu'une partie des travaux collaboratifs est ainsi réalisée individuellement dans le composant individualisé, le temps de prise de contrôle de l'application partagée par l'un des utilisateurs est réduit à l'action de lier les deux composants. Il en résulte une gêne moindre des autres utilisateurs par exemple lors de la saisie d'une requête, alors que, dans les techniques connues, cette saisie sur l'interface physique monopolise l'application partagée ou fait intervenir des composants communs à l'ensemble des utilisateurs.

Par ailleurs, l'utilisation d'un composant indépendant offre une grande liberté d'exploitation de son travail au travers de ce composant: soit les négociations aboutissent au partage de ce travail et l'interaction avec le composant applicatif commun est réalisée; soit les négociations n'aboutissent pas, et ce composant indépendant peut être utilisé individuellement avec d'autres applications à vocation individuelle notamment.

En définitive, la présente invention permet de concilier efficacement, à tout moment, interaction collective et interaction individuelle en liant ou non l'interaction entre les deux composants commun et individualisé.

En particulier, l'action d'interaction avec l'application partagée comprend une action de glisser-déposer dudit composant individualisé sur ledit composant applicatif commun. De la sorte, l'intervention de l'utilisateur pour apporter sa contribution est réduite au minimum.

Notamment, l'application partagée mettant en oeuvre une fonction de recherche dans au moins une source de données numériques, par exemple l'Internet ou une base de données, l'action de glisser-déposer sur le composant applicatif commun déclenche l'exécution d'une requête comprenant, comme critère de recherche, ledit au moins un paramètre. Cette disposition illustre parfaitement un avantage de la présente invention, puisque chaque utilisateur peut avoir son propre composant individualisé pour y préciser les critères de recherche, puis après négociation, l'utilisateur choisi soumet ses propres critères de recherche sur l'application partagée.

Ainsi, selon une caractéristique de l'invention, on peut prévoir:
- créér, par au moins un autre utilisateur, un composant individualisé, indépendant du composant applicatif commun, avec lequel cet autre utilisateur peut interagir individuellement;
- à l'aide de l'interface physique partagée, définir, par cet autre utilisateur, au moins un paramètre de ladite fonction à l'intérieur du composant individualisé créé par cet autre utilisateur ;
- sélectionner un utilisateur parmi l'ensemble d'utilisateurs, pour interagir avec l'application partagée en liant le composant individualisé de l'utilisateur sélectionné au composant applicatif commun.

Les utilisateurs non retenus peuvent, quant à eux, exploiter individuellement leurs requêtes, au niveau d'une autre application éventuellement personnelle. Pour ce faire, les composants individualisés sont configurés pour être liés indifféremment au composant commun correspondant à ladite application partagée ou à un autre composant correspondant à une autre application, et
un utilisateur non sélectionné interagit avec ladite autre application, en liant son composant individualisé audit autre composant correspondant à cette autre application.

Dans un mode de réalisation, la création du composant individualisé comprend le tracé, par l'utilisateur, sur l'interface physique partagée, d'une forme graphique de sorte à créer, à l'emplacement du tracé, un composant individualisé comprenant un champ de définition de l'au moins un paramètre de la fonction. Cette disposition permet de créer individuellement les composants d'interaction indépendants et utilisables avec l'application partagée, sans gêner les autres utilisateurs. Cette création par tracé est par ailleurs performante en ce qu'elle permet, par la même action, d'organiser efficacement l'espace de travail personnel de l'utilisateur.

Différentes techniques pour définir la fonction du composant créé peuvent être envisagées: tracé d'un raccourci graphique (par exemple de la forme d'un point d'interrogation) lançant un composant pour saisir les mots clés de recherche, tracé d'une forme définissant la forme et les dimensions du composant individualisé puis affectation de la fonction du composant créé soit par menu, soit par menu contextuel (éventuellement réduit à une seule possibilité), etc.

Corrélativement, l'invention concerne un système d'interaction avec une application partagée entre plusieurs utilisateurs et ayant au moins une fonction, le système comprenant :
- une interface physique partagée entre les utilisateurs, adaptée pour afficher ladite application partagée dans un composant applicatif commun ;
- des moyens pour créer, à l'aide de l'interface physique partagée, un composant individualisé, indépendant dudit composant applicatif commun, avec lequel un utilisateur peut interagir individuellement, ledit composant individualisé créé comprenant un champ pour y définir au moins un paramètre de ladite fonction ;
- des moyens pour traiter un signal d'interaction dudit utilisateur avec l'application partagée, en liant ledit composant individualisé comprenant l'au moins un paramètre défini au composant applicatif commun, de sorte à définir ladite fonction.

Le système d'interaction présente des avantages similaires à ceux du procédé d'interaction exposé ci-dessus, notamment celui d'améliorer l'interaction lors d'une session de travail collectif, en permettant de réaliser aisément des actions collectives sur le composant commun et des actions individuelles (sur le composant indépendant) en relation avec le travail collectif (liaison lors de l'interaction entre le travail individuel et le composant commun dédié au travail collectif).

De façon optionnelle, le système peut comprendre des moyens se rapportant aux caractéristiques du procédé exposé précédemment.

En particulier, le système comprend une deuxième application mettant en oeuvre l'au moins une fonction et comprend une pluralité de composants individualisés, chacun doté d'un champ pour y définir ledit au moins un paramètre, lesdits composants individualisés étant configurés pour être indifféremment liés à un composant correspondant à l'une ou l'autre des deux applications mettant en oeuvre l'au moins une fonction.

L'invention concerne également un moyen de stockage d'informations comprenant des instructions pour un programme informatique adapté à mettre en oeuvre le procédé d'interaction conforme à l'invention lorsque ce programme est chargé et exécuté par un système informatique.

L'invention concerne également un programme d'ordinateur lisible par un microprocesseur, comprenant des instructions pour la mise en oeuvre du procédé d'interaction conforme à l'invention, lorsque ce programme est chargé et exécuté par le microprocesseur.

Les moyens de stockage d'information et programme d'ordinateur présentent des caractéristiques et avantages analogues aux procédés qu'ils mettent en oeuvre.

D'autres particularités et avantages de l'invention apparaîtront dans la description ci-après, illustrée par les dessins ci-joints, dans lesquels :
- la **figure 1** représente une interface graphique partagée affichant un navigateur web partagé ;
- la **figure 2** montre une configuration matérielle particulière d'un dispositif apte à une mise en oeuvre du procédé selon l'invention ;
- la **figure 3** représente le tracé d'un composant de saisie de requête par un utilisateur sur l'interface de la **figure 1** ;
- la **figure 4** illustre l'affichage du composant de saisie de requête tracé dans la figure 3 ;
- la figure 5 illustre la saisie de mots clés dans le composant de saisie de requête de la **figure 4** ;
- la **figure 6** illustre l'exécution d'une requête de recherche web à l'aide des mots clés saisis dans le composant de saisie de la **figure 4** ;
- la **figure 7** représente l'interface partagée de la **figure 1** dans laquelle le navigateur web partagée affiche, sous forme de vignettes, les résultats de la requête de la figure 6 ;
- la **figure 8** illustre l'exécution d'une requête de recherche web d'un autre utilisateur dans un navigateur web à vocation personnelle ; et
- la **figure 9** illustre l'exploitation personnelle des résultats de la requête de recherche web par les utilisateurs.

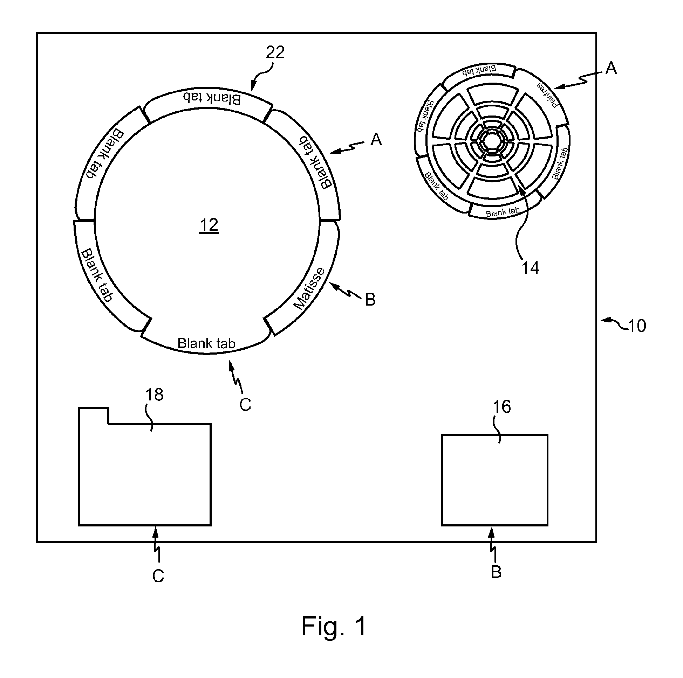

Sur la **figure 1**, on a représenté l'interface physique partagée 10 d'un équipement, partagée entre plusieurs utilisateurs A, B, C. Cette interface physique partagée 10 permet l'interaction simultanée de plusieurs utilisateurs sur l'environnement informatique affiché sur cette interface. Cette interface physique partagée 10 peut notamment être du type table, tablette ou écran interactif, écran tactile TabletPC, tableau blanc, mur interactif ou ardoise numérique multi-tactile.

Les moyens d'interaction (clavier, souris) peuvent être intégrés à l'interface d'affichage (écran tactile avec présentation de claviers virtuels) ou être des périphériques classiques reliés à une unité centrale pilotant l'interface partagée d'affichage.

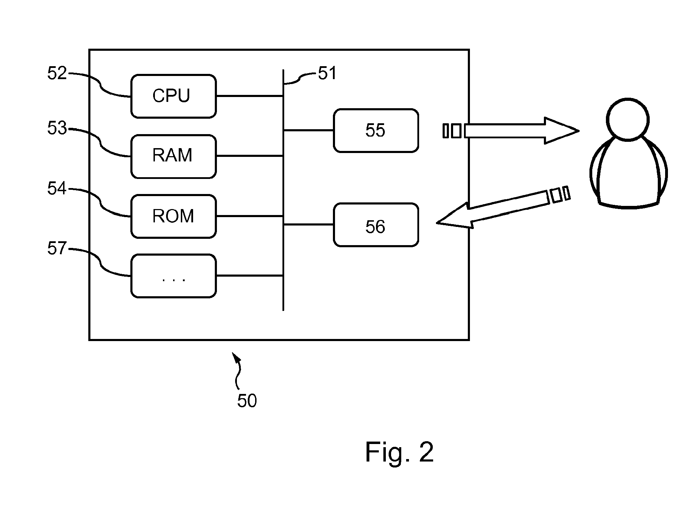

La **figure 2** montre schématiquement un système 50 pour la mise en oeuvre de l'invention, notamment l'équipement ayant l'interface physique partagée.

Le système 50 comprend un bus de communication 51 auquel sont reliés une unité centrale de traitement ou "microprocesseur" 52, une mémoire vive 53, une mémoire morte 54, un dispositif d'affichage 55, un dispositif de pointage 56 et éventuellement d'autres périphériques 57 (interface de communication, lecteur de disquette ou disques, etc.).

La mémoire morte 54 comprend les programmes dont l'exécution permet la mise en oeuvre du procédé selon l'invention, ainsi que les fichiers exécutables d'applications logicielles utilisées par les différents utilisateurs A, B, C.

Lors de l'exécution de programmes, le code exécutable de ceux-ci est chargé en mémoire vive 53, type RAM, et exécuté par le microprocesseur 52. Cette exécution permet le contrôle de l'interface physique partagée 10, notamment l'affichage d'un espace numérique de travail, comme représenté sur la **figure 1**, de fenêtres applicatives, ainsi que l'exécution à proprement parler des applications visualisées dans ces fenêtres.

Le dispositif d'affichage 55, tel qu'un écran, une dalle LCD ou un vidéo-projecteur, permet l'affichage de l'interface graphique partagée 10 par laquelle les utilisateurs visualisent l'exécution des applications au travers de fenêtres, et interagissent sur elles.

Le dispositif de pointage 56 peut être intégré au dispositif d'affichage, notamment lorsqu'il s'agit d'un écran tactile, ou déporté, par exemple une souris, un *touchpad* ou encore une tablette graphique.

Le dispositif décrit ici et, particulièrement, l'unité centrale 52, sont susceptibles de mettre en oeuvre tout ou partie des traitements décrits en lien avec les **figures 1** et **3** à **9**, pour mettre en oeuvre les procédés objets de la présente invention et constituer les systèmes objets de la présente invention.

De retour à la **figure 1**, l'espace de travail numérique (ou "bureau") affiché sur l'interface partagée 10 comprend un navigateur web 12 partagé entre les trois utilisateurs (symbolisé par les flèches brisées - par la suite, les flèches brisées symbolisent l'action d'un utilisateur sur un composant de l'interface partagée 10) et affiché au travers d'une fenêtre applicative commune 22.

La notion de "commune" résulte ici d'une convention fixée par les utilisateurs, selon laquelle cette fenêtre applicative, et donc l'application web correspondante, sont l'objet de leur attention simultanément aux fins de travaux collectifs. Ainsi, un navigateur web partagé ou commun est donc techniquement similaire à un navigateur web à vocation personnelle, si ce n'est qu'il capte l'attention du groupe d'utilisateurs. Ainsi un navigateur personnel peut devenir un navigateur commun selon l'intérêt qu'il porte par la suite, en lien notamment avec des travaux collaboratifs sur celui-ci.

Le navigateur web 12 représenté ici est circulaire permettant une lecture à plusieurs autour de la table interactive, comme présenté notamment dans la publication *"*Personal Digital Historian: Story Sharing Around the Table", Shen, C.; Lesh, N.; Vernier, F., ACM Interactions, ISSN:1072-5520, Vol. 10, Issue 2, pp. 15-22, March/April 2003.

De façon connue en soi, un navigateur web permet d'accéder à divers services ou fonctions soit localement, soit au moyen de serveurs distants. Les fonctions de recherche d'images ou de sites web, les fonctions d'accès à des serveurs d'échanges de fichiers (dits FTP) ou les fonctions de partages de fichiers sont autant d'exemples.

L'espace de travail comprend également des zones que chaque utilisateur s'est attribué en fonction de sa place autour de la table interactive, aux fins de réaliser des actions personnelles. Dans notre exemple, l'utilisateur A dispose d'un navigateur web 14 que lui seul utilise dans le coin en haut à droite de l'interface telle que représentée sur les figures; l'utilisateur B dispose d'une application 16 à usage personnel (coin en bas à droite); et l'utilisateur C a par exemple ouvert un explorateur de fichiers 18 (coin en bas à gauche).

Pour la suite de la description, on prend l'exemple d'un travail commun entre les trois utilisateurs de recherche d'images sur le réseau Internet, à l'aide du navigateur web partagé 12.

Selon l'invention, chaque utilisateur souhaitant saisir une nouvelle requête de recherche crée un composant personnel pour saisir les critères ou paramètres de recherche. Ce composant personnel est, à ce stade, complètement indépendant du composant applicatif commun 22 affichant le navigateur web partagé 12 et de toute autre application offrant la même fonction de recherche (navigateur 14). L'utilisateur saisit alors sa requête dans ce nouveau composant, puis après avoir négocié l'autorisation avec les autres utilisateurs, il envoie la saisie sur le navigateur partagé, focus de l'attention du groupe. Si les partenaires ne sont pas d'accord, alors l'utilisateur peut déposer sa requête sur son navigateur personnel qu'il aura ouvert au préalable.

L'invention repose ainsi sur une dissociation entre le composant de saisie de paramètres pour la requête, et celui (navigateur web) d'exécution de celle-ci et d'affichage du résultat.

Cette dissociation a pour intérêt de permettre à chacun, de saisir indépendamment une requête à vocation de contribuer au travail collectif, et offre donc une plus grande liberté d'interaction pour chaque utilisateur.

Cette méthode permet également de lancer la requête ainsi saisie dans le navigateur de son choix : si les participants refusent que l'utilisateur en question prenne la main sur le navigateur partagé, alors l'utilisateur est libre d'envoyer sa requête sur un nouveau navigateur qu'il ouvre à cette fin; si au contraire, il y a accord, alors la requête saisie est dirigée vers le navigateur partagée.

Ainsi plusieurs utilisateurs peuvent saisir, en même temps, différentes requêtes, puis négocier entre eux simplement la pertinence de leur requête avant de la soumettre par un glisser-déposer dans tel ou tel navigateur selon le consensus retenu par les utilisateurs. L'absence de prise de main sur le navigateur partagé rend moins brutale la négociation d'une nouvelle recherche.

Par ailleurs, cette dissociation évite d'entraver l'activité des autres utilisateurs: ceux-ci ne sont pas désoeuvrés lors de la saisie de la nouvelle requête par l'un d'entre eux, puisqu'elle a lieu sur un composant personnel distinct et indépendant de celui du navigateur web partagé 12.

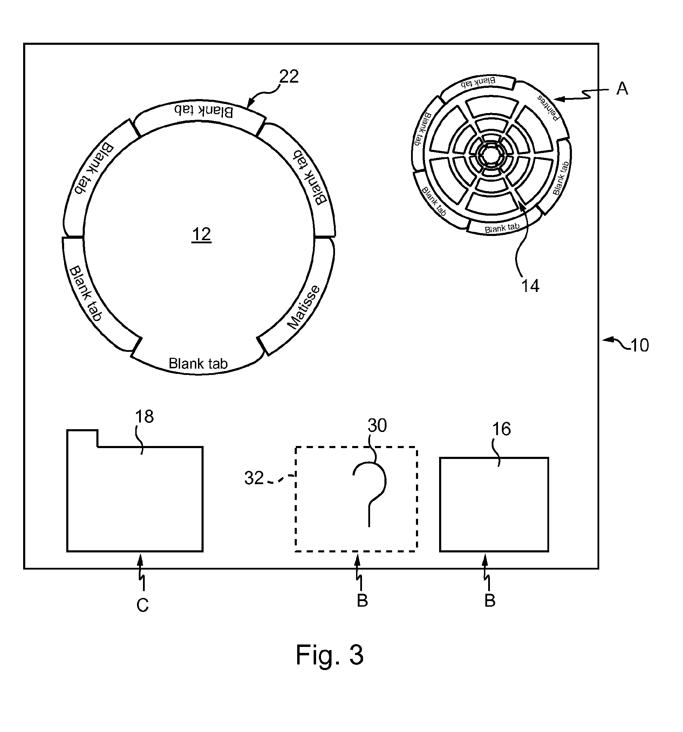

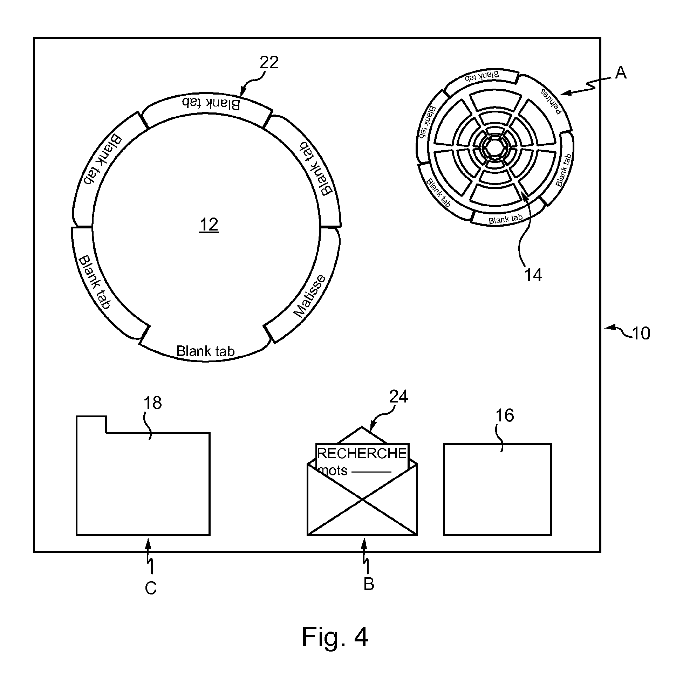

Ainsi, en lien avec les **figures 3** et **4****,** lorsqu'un des utilisateurs, ici l'utilisateur B, pense à une nouvelle requête de recherche, il crée le composant de saisie 24 de la requête, distinct et indépendant du composant applicatif commun 22 affichant le navigateur web 12.

Dans notre exemple, la création de ce composant de saisie peut être réalisée par le tracé (par exemple à l'aide d'un doigt ou un stylet sur l'écran tactile) d'un raccourci graphique, ici un point d'interrogation 30 (**figure 3**), auquel est associé le composant de saisie de la requête 24. Ainsi, le système de contrôle de l'interface partagée 10 détecte le tracé du point d'interrogation 30 et affiche automatiquement le composant de saisie 24 (**figure 4**).

Le composant de saisie 24 est ici individualisé pour l'utilisateur B dans sa zone personnelle de travail, car il a vocation à être utilisé par ce dernier pour une action individuelle. Dans le cadre de l'invention, ce composant de saisie 24 est non affecté a *priori,* en ce qu'il n'est pas lié à un navigateur web ni à aucune application ouverte par les utilisateurs. Comme vu précédemment, un tel composant de saisie 24 peut être ensuite lié au navigateur partagé 12 ou à un navigateur "personnel" 18 selon l'issue des négociations entre les différents utilisateurs.

On remarquera que les composants graphiques classiques ont généralement des relations de dépendances prédéfinies entre eux, de telle sorte qu'il n'est pas possible a *posteriori* de les affecter à n'importe quelle application en cours d'exécution.

Ainsi, comme illustré sur la **figure 4**, le composant de saisie 24 ne peut être qu'un composant graphique avec un champ de saisie de mots clés, similaire à une *toolbar.* Ce champ peut notamment correspondre à un champ d'un document XML, source utilisée pour l'affichage de ce composant.

Des mécanismes alternatifs à l'utilisation d'un raccourci graphique 30 peuvent être envisagés. Par exemple, l'utilisateur B peut tracer sur l'interface partagée 10 une forme géométrique, ici un rectangle 32, définissant la forme d'affichage du composant de saisie 24. Par ailleurs, l'affectation de ce composant à une fonction particulière (par exemple fonction de saisie d'une requête, fonction calculatrice, fonction d'explorateur de fichiers, etc.) peut être réalisée au travers d'une sélection dans un menu s'affichant une fois la forme tracée. En outre, ce menu peut être contextuel en ce que les entrées affichées dans le menu dépendent de l'environnement d'exécution (par exemple la fenêtre active au moment du tracé, les fenêtres ouvertes au même moment, etc.). Ainsi divers mécanismes de création du composant de saisie 24 peuvent être prévus.

Bien entendu, ces menus permettent de préciser à quel type de fonction d'une application, ce nouveau composant correspond: par exemple à la saisie de critères de recherche pour un navigateur web; à la saisie de paramètres d'exploration pour un explorateur de fichiers; etc.

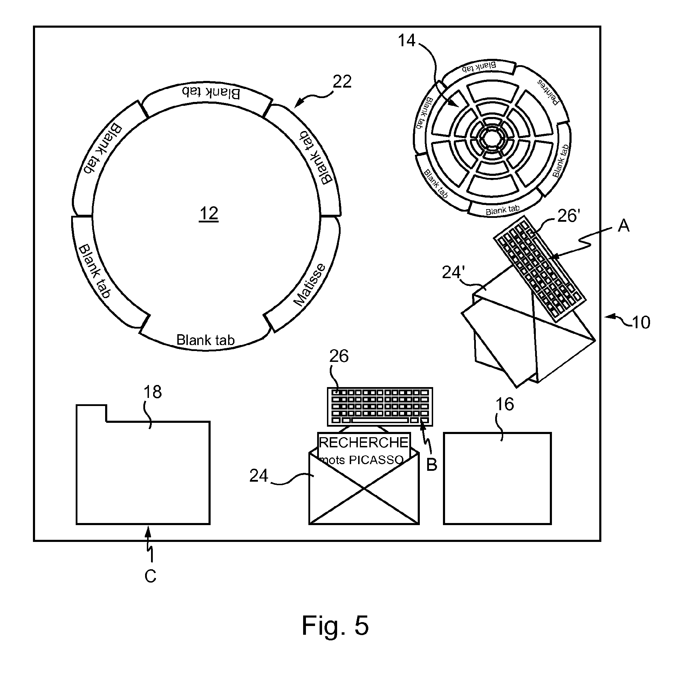

Dans notre exemple, le composant de saisie 24 de requête est dessiné sous forme d'une enveloppe. Il permet de définir un ou plusieurs paramètres relatifs à la recherche à opérer dans un navigateur web. Notamment, il permet de sélectionner le type de documents recherchés (vidéos, images, pages web) et le lieu de la recherche (sur les disques locaux, sur le réseau local ou sur le réseau Internet), et de saisir des mots clés de recherche dans une zone de saisie de texte, par exemple une zone activable au doigt dont le texte est saisi à l'aide d'un clavier virtuel 26 (s'affichant à l'activation de la zone de saisie). Cela est illustré sur la **figure 5**, montrant la saisie du mot "PICASSO" dans la zone de saisie.

On a, par ailleurs, représenté sur cette même **figure 5**, un autre composant de saisie 24' que l'utilisateur A a créé (de façon similaire à ce qui a été décrit ci-dessus). L'utilisateur A renseigne également la zone de saisie avec, ici, les mots "RAOUL DUFY", au moyen du clavier virtuel 26'.

A ce stade, le travail collaboratif fait intervenir une négociation entre les différents utilisateurs pour savoir laquelle des requêtes établies par les différents utilisateurs doit être partagée (l'utilisateur C pouvant également avoir préparé une requête via un autre composant de saisie de requête indépendant du composant commun 22).

Un consensus s'établit après discussion, par exemple que la requête de l'utilisateur B soit présentée comme dans le navigateur web partagé 12 aux fins d'effectuer un travail collectif dessus.

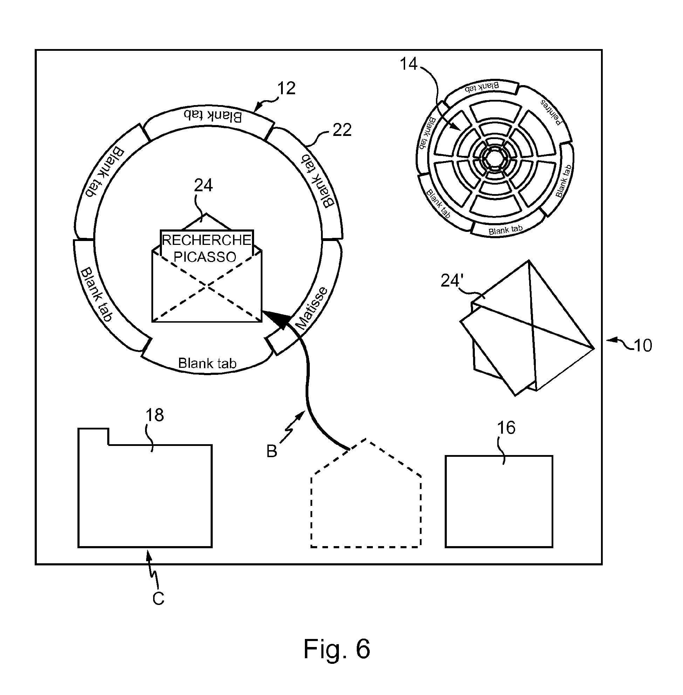

Ainsi, après accord entre les utilisateurs autour de la table, l'utilisateur B envoie sa requête (à ce stade non affecté à un navigateur web particulier) sur le navigateur web partagé 12. Pour cela, il déplace son composant individualisé de saisie 24 sur le composant commun 22 affichant le navigateur web partagé 12 (**figure 6**), puis le lâche (action de glisser-déposer bien connue par l'homme de l'art) de sorte à déclencher l'exécution de la recherche par le navigateur web partagé 12.

Ce déclenchement provoque l'extraction du texte saisi du composant 24 (ici un champ XML dans le fichier XML codant le composant), et éventuellement d'autres paramètres relatifs à la fonction de recherche (emplacement de recherche, type de documents recherchés). Ces informations sont donc récupérées par le système de gestion pour former une requête classique de recherche, par exemple http, indiquant ces différents critères et paramètres et à destination d'un moteur de recherche. Le format d'une telle requête n'est pas décrit plus en détail car bien connu de l'homme de l'art, notamment dans le domaine de l'Internet.

On note ici que c'est l'action de déposer le composant (indépendant) de saisie 24 sur le navigateur 12 qui lie/associe les paramètres de requête saisis au navigateur partagé.

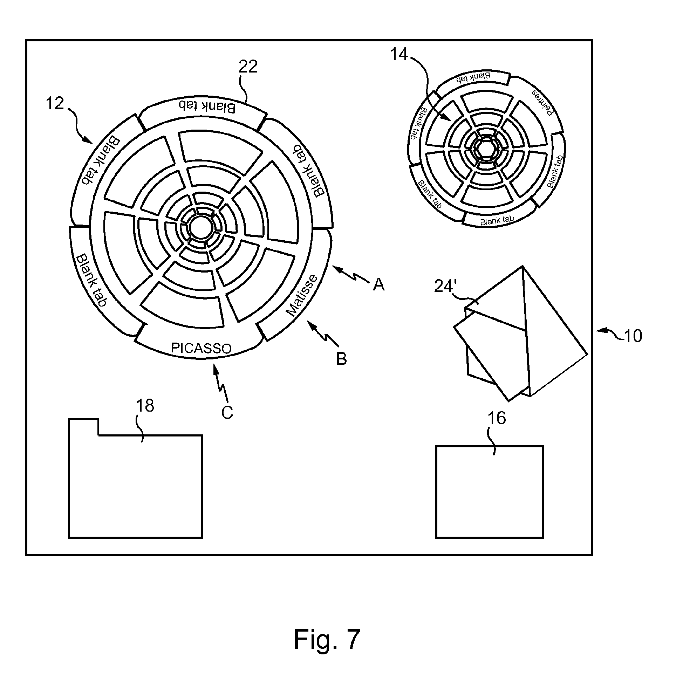

Suite à l'exécution de cette requête (recherche d'images par exemple), le système récupère, du réseau Internet par exemple, une réponse comprenant une pluralité d'images. Un affichage de ces images est alors effectué dans le navigateur partagé 12 (ici de façon circulaire) au niveau d'un onglet reprenant les mots clés de recherche (**figure 7**).

Chaque utilisateur A, B ou C peut alors interagir avec le navigateur partagé 12 comme prévu dans un travail en commun et comme montré par les trois flèches brisées A, B, C sur le composant commun 22.

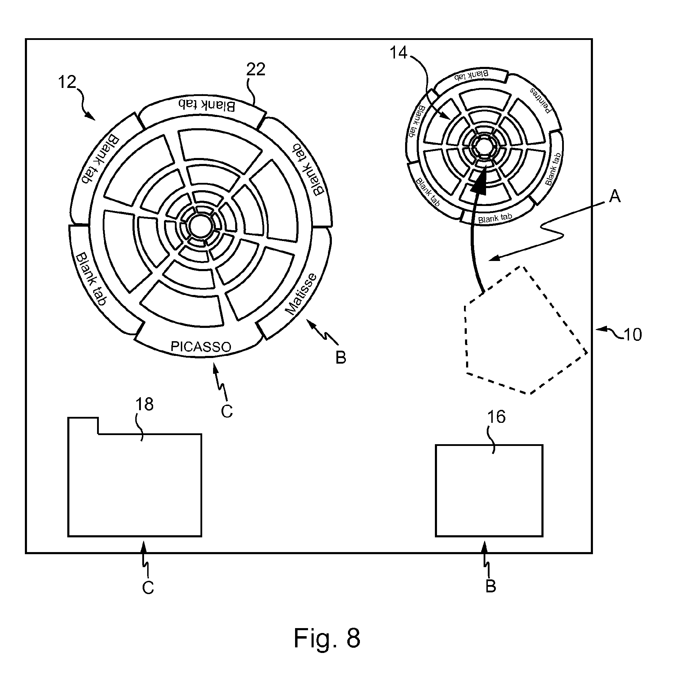

De façon similaire à l'exploitation "commune" de la requête de l'utilisateur B, l'utilisateur A peut souhaiter envoyer, par glisser-déposer de composants, sa propre requête dans un navigateur web à vocation personnelle 14 (figure 8). Cette décision peut résulter du refus de sa requête par l'ensemble des utilisateurs ou d'une volonté de vérifier la pertinence de sa requête avant d'attirer l'attention des autres utilisateurs sur celle-ci (par exemple en dédiant désormais ce navigateur web à l'usage commun, par exemple en l'agrandissant et le centrant au milieu de la table interactive en lieu et place du navigateur web partagé 12).

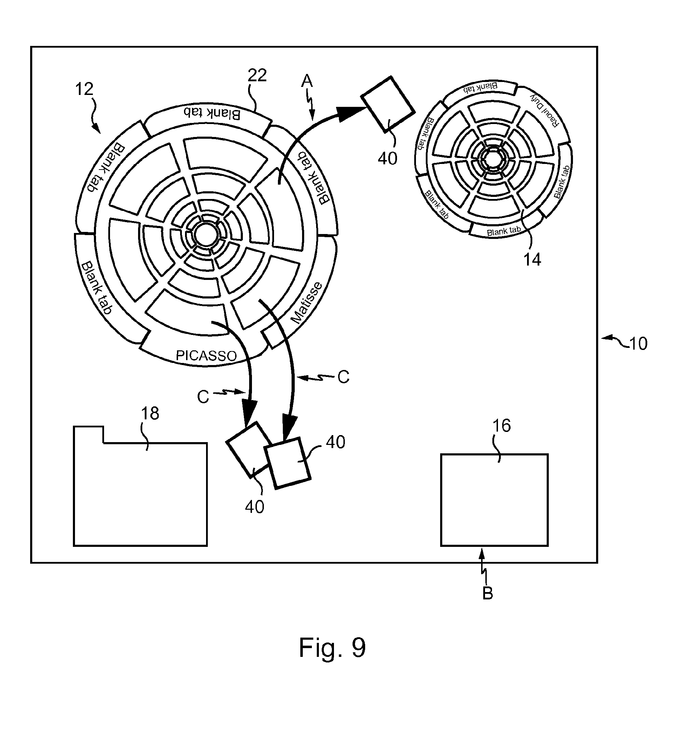

Les paramètres et critères de recherche renseignés par l'utilisateur A sont alors extraits du composant 24' déposé sur le navigateur 14, pour générer une requête http classique à destination d'un moteur de recherche. Les résultats de cette requête sont alors affichés dans le composant d'affichage du navigateur 14 (vignettes d'images), comme montré sur la **figure 9****.**

Bien entendu, du fait du caractère indépendant des composants individualisés, le composant créé par l'utilisateur A aurait pu être lié au navigateur commun 12 si un consensus avec les autres utilisateurs avait été trouvé.

L'invention telle que décrite dans cet exemple permet de rendre plus fluide l'interaction entre les utilisateurs, en dissociant, dans deux composants indépendants, la zone de saisie de requête (ou de paramètres) de la zone d'affichage. Traditionnellement, ces deux zones sont réunies dans un seul composant applicatif, par exemple dans la traditionnelle page web des moteurs de recherche ou dans le navigateur qui intègre, dans le même composant, une zone d'affichage de la page web et une zone *toolbar* de saisie de mots clés. Dans les solutions connues où deux composants sont quand même utilisés, ceux-ci sont étroitement liés de telle sorte qu'ils ne peuvent être utilisés qu'ensemble.

Cette indépendance repose sur l'absence de lien prédéfini entre le composant de saisie de requête et le composant commun de visualisation (avant que l'utilisateur n'explicite ce lien par glisser-déposer du composant de saisie dans le composant de visualisation par exemple). Cette absence de lien permet à plusieurs utilisateurs d'avoir leur propre composant de saisie pour effectuer simultanément, dans le même espace de travail, des actions personnelles en lien avec le travail en commun. Une négociation ultérieure entre ces utilisateurs permet de déterminer laquelle des requêtes saisies est soumise dans le navigateur partagé. Cet enchaînement permet de préparer les requêtes sans monopoliser inutilement le navigateur partagé.

Grâce à cette absence de lien, les requêtes non retenues peuvent tout de même être exploitées individuellement par chacun des utilisateurs correspondants.

La **figure 9** montre également l'exploitation du travail en commun de recherche par chacun des utilisateurs. Comme vu précédemment, le résultat de la recherche est affiché, dans le navigateur partagé 12, sous forme de vignettes d'image représentant symboliquement des hyperliens vers des pages web. Selon le cas d'espèce, ces résultats peuvent également être présentés sous forme de textes.

Suite à cette phase collective de recherche, les utilisateurs souhaitent procéder à une phase d'exploration individuelle en sélectionnant certains liens.

Comme illustré sur la figure, un utilisateur pose alors son doigt sur une vignette (donc un hyperlien): cet appui long fait se détacher la vignette du navigateur partagé 12; puis par glisser, l'utilisateur extrait la vignette en dehors du navigateur partagé 12 (flèches épaisses), où elle demeure persistante, pour créer un composant 40 indépendant reprenant les informations de l'hyperlien. On crée donc, par simple glisser-déposer, un composant indépendant en dehors du navigateur partagé 12, pour chaque objet informatique souhaité listé dans la page affichée du navigateur partagé.

Les informations d'hyperlien peuvent notamment être extraites et copiées de la page html de résultats affichée dans le navigateur 12, à l'aide d'un analyseur syntaxique *(parser)* html.

Ce composant 40 est par exemple défini par un fichier XML ou HTML comprenant également l'hyperlien extrait, et s'affiche comme une vignette si l'hyperlien est une image ou sous forme de texte si l'hyperlien est une page web.

Dans notre exemple, l'utilisateur A récupère un seul hyperlien qu'il copie dans "sa" zone de travail sur l'interface partagée 10; l'utilisateur C récupère deux hyperliens.

Plusieurs vignettes sont ainsi extraites du navigateur partagé 12 pour que chaque utilisateur puisse consulter ultérieurement les résultats choisis, par exemple en cliquant sur le composant 40 ainsi créé ou en le faisant glisser vers un navigateur à vocation personnelle 14.

On voit ici que cette extraction des hyperliens depuis le composant applicatif commune 22 peut être effectuée rapidement par les utilisateurs par glisser-déposer, sans provoquer de gêne importante pour les autres utilisateurs.

Cela permet de concilier à tout moment interaction collective et interaction individuelle : si l'objet de l'attention d'un utilisateur (un hyperlien particulier) n'est pas l'objet de l'attention du groupe, il peut alors le "prendre" et le consulter dans "sa" zone de travail personnelle, sans gêner les autres.

Bien entendu, si l'attention personnelle et l'attention collective coïncident, alors on peut ouvrir l'hyperlien dans le navigateur partagé 12 pour poursuivre le travail collaboratif.

Les exemples qui précèdent ne sont que des modes de réalisation de l'invention qui ne s'y limite pas.

En particulier, bien que la description ci-dessus concerne des applications de type navigateur web, l'invention s'applique à tout type d'application logicielle dotée d'une fonction, pour laquelle, selon l'invention, des paramètres sont alors précisés via un composant de saisie distinct de celui d'exécution de l'application. Le travail collectif consiste alors à exploiter en commun une saisie (de paramètres) réalisée isolément par l'un des utilisateurs.

## Revendications

1. Procédé d'interaction avec une application partagée (12) entre plusieurs utilisateurs (A, B, C), l'application partagée ayant au moins une fonction et étant affichée dans un composant applicatif commun (22) d'une interface physique (10) partagée entre les utilisateurs, **caractérisé en ce qu'**il comprend les étapes consistant à :
- créer un composant individualisé (24, 24'), indépendant dudit composant applicatif commun (22), avec lequel un utilisateur peut interagir individuellement;
- à l'aide de l'interface physique partagée, définir, par l'utilisateur, au moins un paramètre de ladite fonction à l'intérieur du composant individualisé créé;
- pour ledit utilisateur, interagir avec l'application partagée en liant ledit composant individualisé comprenant l'au moins un paramètre défini au composant applicatif commun, de sorte à définir ladite fonction.

2. Procédé selon la revendication 1, dans lequel l'action d'interaction avec l'application partagée (12) comprend une action de glisser-déposer dudit composant individualisé (24, 24') sur ledit composant applicatif commun (22).

3. Procédé selon la revendication 2, dans lequel, l'application partagée (12) mettant en oeuvre une fonction de recherche dans au moins une source de données numériques, l'action de glisser-déposer sur le composant applicatif commun (22) déclenche l'exécution d'une requête comprenant, comme critère de recherche, ledit au moins un paramètre.

4. Procédé selon la revendication 1, comprenant les étapes consistant à :
- créer, par au moins un autre utilisateur (A), un composant individualisé (24'), indépendant du composant applicatif commun (22), avec lequel cet autre utilisateur peut interagir individuellement ;
- à l'aide de l'interface physique partagée, définir, par cet autre utilisateur, au moins un paramètre de ladite fonction à l'intérieur du composant individualisé créé par cet autre utilisateur ;
- sélectionner un utilisateur parmi l'ensemble d'utilisateurs (A, B, C), pour interagir avec l'application partagée (12) en liant le composant individualisé de l'utilisateur sélectionné (24) au composant applicatif commun (22).

5. Procédé selon la revendication 4, dans lequel les composants individualisés (24, 24') sont configurés pour être liés indifféremment au composant commun (22) correspondant à ladite application partagée (12) ou à un autre composant correspondant à une autre application (14), et
un utilisateur non sélectionné (A) interagit avec ladite autre application (14), en liant son composant individualisé (24') audit autre composant correspondant à cette autre application.

6. Procédé selon la revendication 1, dans lequel la création du composant individualisé (24, 24') comprend le tracé, par l'utilisateur, sur l'interface physique partagée (10), d'une forme graphique (30, 32) de sorte à créer, à l'emplacement du tracé, un composant individualisé comprenant un champ de définition de l'au moins un paramètre de la fonction.

7. Système d'interaction avec une application partagée (12) entre plusieurs utilisateurs (A, B, C) et ayant au moins une fonction, le système comprenant :
- une interface physique (10) partagée entre les utilisateurs, adaptée pour afficher ladite application partagée (12) dans un composant applicatif commun (22) ;
- des moyens pour créer, à l'aide de l'interface physique partagée, un composant individualisé (24, 24'), indépendant dudit composant applicatif commun (22), avec lequel un utilisateur peut interagir individuellement, ledit composant individualisé créé comprenant un champ pour y définir au moins un paramètre de ladite fonction ;
- des moyens pour traiter un signal d'interaction dudit utilisateur avec l'application partagée, en liant ledit composant individualisé comprenant l'au moins un paramètre défini au composant applicatif commun, de sorte à définir ladite fonction.

8. Système selon la revendication 7, comprenant:
- une deuxième application (14) mettant en oeuvre l'au moins une fonction, et
- une pluralité de composants individualisés (24, 24'), chacun doté d'un champ pour y définir ledit au moins un paramètre,
lesdits composants individualisés (24, 24') étant configurés pour être indifféremment liés à un composant correspondant à l'une ou l'autre des deux applications (12, 14) mettant en oeuvre l'au moins une fonction.

9. Moyen de stockage d'informations comprenant des instructions pour un programme informatique adapté à mettre en oeuvre le procédé de gestion conforme à l'une quelconque des revendications 1 à 6, lorsque ce programme est chargé et exécuté par le système informatique.

10. Produit programme d'ordinateur lisible par un microprocesseur, comprenant des instructions pour la mise en oeuvre du procédé de gestion conforme à l'une quelconque des revendications 1 à 6, lorsque ce programme est chargé et exécuté par le microprocesseur.
